# EUROPEAN PATENT APPLICATION

(11) **EP 3 779 253 A1**
(43) Date of publication of application: **17.02.2021**
(21) Application number: 19775274.4
(22) Date of filing: 25.02.2019
(51) Int. Cl.: F16K 31/04, F25B 41/06

(54) **ELECTRICALLY OPERATED VALVE**

(30) Priority: 26.03.2018 JP 2018058060
(71) Applicant: Fujikoki Corporation, Tokyo 158-0082 (JP)
(72) Inventor: YOSHIDA, Tatsuya, Tokyo 158-0082 (JP); YAZAWA, Masashi, Tokyo 158-0082 (JP)
(74) Representative: Ter Meer Steinmeister & Partner
(86) International application number: PCT/JP2019/006967
(87) International publication number: WO 2019/187866

(57) **Abstract**

A motorized valve that can suppress foreign substances from getting caught while maintaining little flow rate is provided. A motorized valve (100) changes the insertion amount of a valve body (7) into an orifice (5) to control the flow rate. A straight portion (16) is formed to one of an inner surface of the orifice (5) and an outer surface of the valve body (7), and which has a diameter constant in an insertion direction of the valve body (7). A protruding portion (17) is formed to the other of the inner surface of the orifice (5) and the outer surface of the valve body (7) which the straight portion (16) is not formed, and which gets the closest to the straight portion (16) at one point in the insertion direction of the valve body (7).

## Description

### TECHNICAL FIELD

The present disclosure relates to a motorized valve incorporated and used in refrigeration cycle, such as air conditioner and refrigerator, etc., to perform flow rate control.

### BACKGROUND ART

An motorized valve connects a first port and a second port via a valve chamber, and changes the cross-sectional area of an opening of the first port by a valve body in the valve chamber, to control flow rate. An orifice is disposed to the first port. Meanwhile, the diameter of the valve body gradually decreases, so that the valve body is tapered. Therefore, according to the insertion amount of the valve body to the orifice, the cross-sectional area of the gap between the valve body and the orifice changes.

In such motorized valves, a so-called screw feeding mechanism is adopted for the movement scheme of the valve body (e.g. refer Patent Document 1) . In this movement scheme, the valve body is formed at the tip region of a valve shaft extended to the orifice. The valve shaft is movable in the axial direction. The valve shaft is integrated with the valve shaft holder to which a movable screw is formed, and the movable screw of the valve shaft holder is screwed together with a fixed screw of an immovable guide bush. In addition, the valve shaft holder is integrated with a rotor of a stepping motor and rotates axially. Accordingly, the valve shaft holder axially rotates with the rotor and is fed along the guide bush, the valve shaft moves in the axial direction together with the valve shaft holder, and the valve body moves in the direction inserted into or pulled out relative to the orifice.

Fluid may flow from the first port to the second port, or may flow from the second port to the first port. Therefore, the pressure of fluid may be applied to the valve shaft from the first port side or from the second port side. Meanwhile, for the fixed screw and the movable screw to rotate while being engaged with each other, slight gap, that is, backlash is required between the screw threads of two. When there is backlash, the valve shaft may swing even if the screw feeding is stopped, and the insertion amount of the valve shaft may vary. Accordingly, by the swing of the valve shaft due to the backlash, there is a concern that the zero-pulse flow rate cannot be maintained.

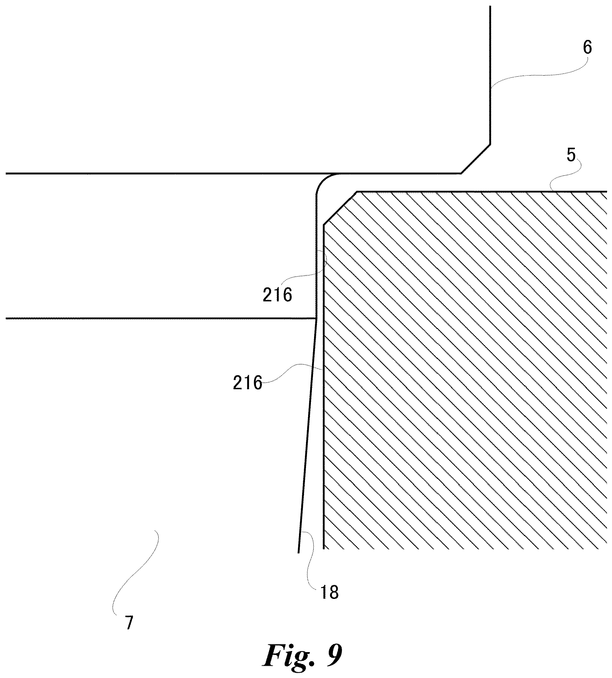

To address this problem, as illustrated in Fig. 9, straight portions 216 having same diameter along the axial direction are provided to each of the orifice 5 and the valve body 7. The overall length of each straight portion 216 is set to be longer than the backlash. Furthermore, the straight portions 216 are facing each other when the valve body 7 is inserted into the deepest part of the orifice 5. Accordingly, since the overlapping portions of the straight portions 216 remains even if the valve body swings due to the backlash, the minimum flow rate of the motorized valve can be maintained.

Meanwhile, as illustrated in Fig. 9, in the motorized valve for refrigeration cycle application, minimum clearance is provided between the straight portions 216 to not make the flow rate of refrigerant zero even in the condition the valve body 7 is inserted into the deepest part of the orifice 5, that is, in the condition the valve body 5 is moved to the lowest position (the most descended position) in the figure.

### CITATION LIST

### PATENT DOCUMENT

Patent Document 1: JP2018-025308

### SUMMARY

### PROBLEM TO BE SOLVED BY THE INVENTION

Foreign substances may be contaminated in fluid, and these foreign substances may enter in the valve chamber. When the straight portion 216 is provided to the facing valve body 7 and orifice 5, and the clearance is provided between the straight portions for not providing closing valve, the foreign substances may enter and get caught between the straight portions 216, and the straight portions 216 may be restricted.

The present disclosure is suggested to address the above conventional problem, and the objective is to provide a motorized valve that can suppress foreign substances from getting caught while maintaining little flow rate.

### MEANS FOR SOLVING THE PROBLEM

To achieve the above objective, a motorized valve according to the present disclosure is a valve that controls the flow rate, and the motorized valve includes a plurality of ports communicated via a valve chamber, an orifice provided to one of the ports, a valve body which is provided inside the valve chamber and which has a variable insertion amount relative to the orifice, a straight portion which is formed to one of an inner surface of the orifice and an outer surface of the valve body, and which has a diameter constant in a insertion direction of the valve body, a protruding portion which is formed to the other of the inner surface of the orifice and the outer surface of the valve body which the straight portion is not formed, and which gets the closest to the straight portion at one point in the insertion direction of the valve body.

The straight portion may be formed to the inner surface of the orifice, and the protruding portion may be a portion with the largest diameter in the valve body formed to the outer surface of the valve body.

The straight portion may be formed to the outer surface of the orifice, and the protruding portion may be the narrowest portion in the orifice formed to the outer surface of the orifice.

The protruding portion may get the closest at one point protruding as a corner, may get the closest at one point in a curved surface, or get the closest at one point in a boundary of a curved surface and a plane which are smoothly connected, relative to the straight portion.

The screw feeding mechanism to move the valve body may be provided. The protruding portion formed in the valve body may face the straight portion at a position deep by a backlash of the screw feeding mechanism from the shallowest portion of the straight portion when the valve body is inserted into the deepest portion of the orifice.

The screw feeding mechanism to move the valve body may be provided. The protruding portion formed in the orifice may face the straight portion at the shallowest portion of said straight portion, and the straight portion may have a diameter constant for equal to or more than the backlash of the screw feeding mechanism in the insertion direction of the valve body.

A cylindrical member connected to a valve main body, and a stator wrapping the cylindrical member may be provided.

### EFFECT OF INVENTION

According to the present disclosure, a motorized valve can suppress foreign substances from getting caught while maintaining little flow rate

### DESCRIPTION OF DRAWINGS

Fig. 1 is a cross-sectional diagram illustrating a configuration of a motorized valve according to the present embodiment.
Fig.2 is a cross-sectional diagram illustrating a detailed configuration of a valve body and an orifice according to the present embodiment in a first example.
Fig.3 is a diagram illustrating a flow rate characteristic of the motorized valve according to the present embodiment.
Fig.4 is a cross-sectional diagram illustrating a detailed configuration of a valve body and an orifice according to the present embodiment in a second example.
Fig.5 is a cross-sectional diagram illustrating a detailed configuration of a valve body and an orifice according to the present embodiment in a third example.
Fig.6 is a cross-sectional diagram illustrating a detailed configuration of a valve body and an orifice according to the present embodiment in a fourth example.
Fig.7 is a cross-sectional diagram illustrating a detailed configuration of a valve body and an orifice according to the present embodiment in a fifth example.
Fig.8 is a cross-sectional diagram illustrating a detailed configuration of a valve body and an orifice according to the present embodiment in a sixth example.
Fig. 9 is Fig.2 is a cross-sectional diagram illustrating a detailed configuration of conventional valve body and an orifice.

### PREFERRED EMBODIMENT OF INVENTION

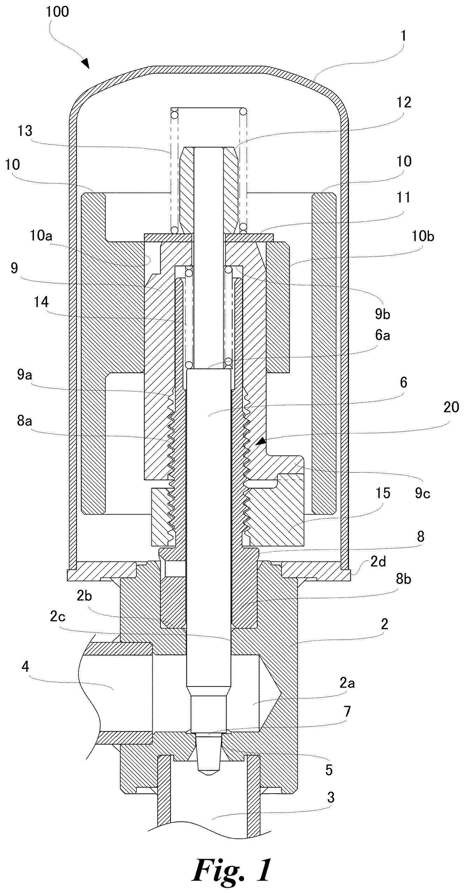

Hereinafter, a motorized valve according to an embodiment of the present disclosure will be described in detail with the reference to the figures. Fig. 1 is a cross-sectional diagram illustrating a configuration of a motorized valve 100 according to the present embodiment. However, a stator of a stepping motor provided outside a cylindrical member is omitted therefrom. Hereinafter, based on the positional relationship between the cylindrical member 1 and a valve main body 2 in Fig. 1, the cylindrical member 1 side is also referred to as the upper side, the valve main body 2 side is also referred to as the lower side, and the direction perpendicular to the vertical direction is referred to as the horizontal direction or the lateral direction. Furthermore, the movement toward the upper direction is referred to as "ascending" and the movement toward the lower direction is referred to as "descending". However, these directions are merely presented to indicate the positional relationship of each structure of the motorized valve 100, and the positional relationship and the direction of the motorized valve 100 when installed are not limited.

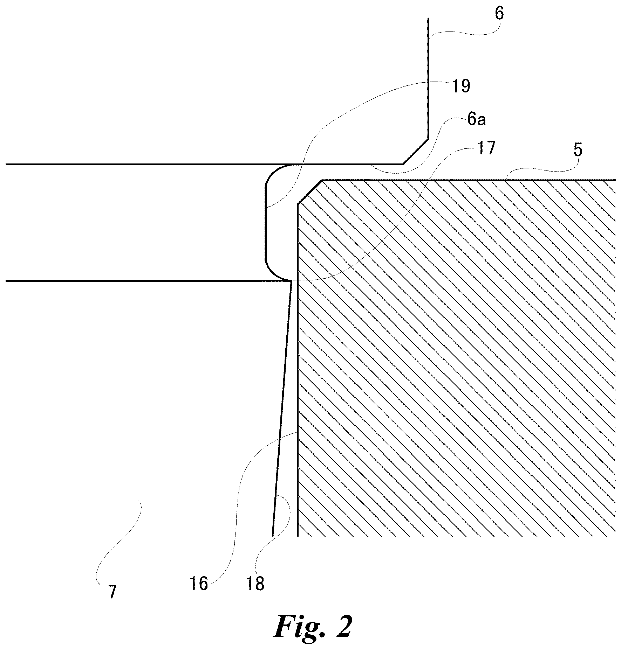

As illustrated in Fig.1, the motorized valve 100 includes a first port 3 connected to a lower pipe, a second port 4 connected to a lateral pipe, a valve main body 2 to which a valve chamber 2a is provided, and a cylindrical member 1 airtightly connected to the valve main body 2. The first port 3 and the second port 4 that are the flow paths for fluid, such as refrigerant, etc., are communicated with each other via the valve chamber 2a. An orifice 5 is disposed to the first port 3. Furthermore, the motorized valve 100 includes a valve body 7 that controls the insertion amount to the orifice 5 to adjust the flow rate. The valve body 7 is tapered toward the tip-side (lower side in Figs. 1 and 2), the waist circumference (the cross-sectional diameter of the valve body 7 in the direction perpendicular to the ascending direction) of the valve body 7 varies relative to the height from the tip (the length of the valve body 7 in the ascending direction) . This valve body 7 is formed in the tip of a valve shaft 6 movable in the axial direction (that is, movable in the ascending direction). The valve shaft 6 has a stepping motor as the driving source, and moves in the axial direction so as to get close to the orifice 5 or get apart from the orifice 5 by a screw feeding mechanism 20. Accordingly, the insertion amount of the valve body 7 to the orifice 5 becomes variable, and the flow rate between the first port 3 and the second port 4 is controlled according to the insertion amount. Note that, in the preset embodiment, the valve shaft 6 and the valve body 7 is formed as an integral member by shaving stainless steel, etc.

The cylindrical member 1 is an airtight container in which the movement mechanism of the valve shaft 6 including the screw feeding mechanism is housed. This cylindrical member 1 is also referred to as "can", is formed of non-magnetic metal plate, such as stainless steel, etc., has a cup-shape which is closed in a hemisphere shape at one end, and is wrapped by a stator (not illustrated) of the stepping motor of the motorized valve 100. The cylindrical member 1 and the valve main body 2 are piled up by matching the opening of the cylindrical member 1 and the opening of the valve main body 2. Typically, a brim member 2d expanding to the cylindrical member 1 side outwardly in the radial direction is provided to the valve main body 2, and the cylindrical member 1 and the valve main body 2 are connect4ed via the brim member 2d. The brim member 2d may be integrated with the valve main body 2, that is, may be formed by extending from the valve main body 2.

The first port 3 is connected to the end surface of the valve main body 2 opposite to the opening of the valve main body 2 and is communicated to the valve chamber 2a, and extends in the axial direction same as the center axis of the cylindrical member 1. The second port 4 is connected to the side surface of the valve main body 2 and is communicated to the valve chamber 2a, and extends in the direction perpendicular to the extending direction of the first port 3. The orifice 5 is disposed in the end surface of the opening of the first port 3.

The valve shaft 6 is disposed in the same axis as the center axis of the cylindrical member 1, and has a bar-shape. The valve shaft 6 passes through the opening of the cylindrical member 1 and the opening of the valve main body 2, protrudes into the valve chamber 2 from the cylindrical member 1, and the tip thereof reaches the orifice 5 of the first port 3.

When the valve shaft 6 moves in the axial direction by the screw feeding mechanism 20 provided in the cylindrical member 1, the insertion amount of the valve body 7 to the orifice 5 changes. When the insertion amount of the tapered valve body 7 changes, the cross-sectional area of the gap formed by the outer surface of the valve body 7 and the inner surface of the orifice 5 changes according to the insertion amount. Therefore, the size of the opening of the first port 3 changes, and the flow rate between the first port 3 and the second port 4 via the valve chamber 2a changes.

The valve shaft 6 is supported by the guide bush 8 to be rotatable and vertically movable. The guide bush 8 is disposed in the same axis as the valve shaft 6, has a cylindrical shape, supports the circumference of the valve shaft 6 along the axial direction, and guides the valve body 7 to the orifice 5 while restricting the movement in the radial direction and the inclination of the axis. This guide bush 8 is disposed to the cylindrical member 1, a part of the guide bush 8 protrudes to the valve main body 2 side from the interior of the cylindrical member 1. The opening of the valve main body 2 is formed by a support hole 2b with large diameter to fix the guide bush 8, and a through hole 2c with small diameter penetrating the bottom of the support hole 2b for the valve shaft 6 to pass through. A projecting portion 8b of the guide bush 8 is press-fit to the support hole 2b.

A fixed screw 8a that is a male screw is formed on the outer circumference of the guide bush 8. Meanwhile, a female screw (a movable screw 9a) formed on the inner circumference of a valve shaft holder 9 disposed in the cylindrical member 1 is screwed to the fixed screw 8a of the guide bush 8. That is, accordingly, the valve shaft holder 9 is movable in the axial direction while axially rotating around the guide bush 8.

A rotor 10 of the stepping motor is provided on the outer circumference of the valve shaft holder 9 in the same axis. The rotor 10 is formed of rare earth plastic magnet, such as Nd-Fe-B magnet, etc., has a cylindrical shape, and a support body 10 to support the valve shaft holder 9 is extended to the inner surface. An installation hole 10a of the valve shaft holder 9 is opened in the support body 10b, and the valve shaft holder 9 is fit to this installation hole 10a to fix the rotor 10 and the valve shaft holder 9.

Furthermore, the back end of the valve shaft 6 toward the bottom of the cylindrical member 1 projects from the guide bush 8, and also projects from the opening of a ceiling 9b of the valve shaft holder 9. A push nut 12 is fixed to this projecting part by means of press-fit or welding, etc., via a rotor presser 11 in a washer-shape expanding in the radial direction of the cylindrical portion 1. In addition, the diameter of the valve shaft 6 becomes narrow from the intermediate portion to the back end to form a step portion 6a, and a compression coil spring 14 fit to the valve shaft 6 between the step portion 6a and the ceiling 9b of the valve shaft holder.

The compression coil spring 14 applies force toward the push nut 12 side to the valve shaft holder 9. Therefore, the rotor presser 11 and the ceiling 9b of the valve shaft holder 9 is elastically sandwiched by the compression coil spring 14 and the push nut 12, so that the valve shaft holder 9 fixed to the rotor 10, the rotor presser 11, the push nut 12, and the valve shaft 6 are integrated with the rotor 10, and rotate as the rotor 10 rotates. Accordingly, by the screwing of the movable screw 9a of the valve shaft holder 9 and the fixed screw 8a of the guide bush 8, the valve shaft holder 9 moves in the axial direction along with the rotation, and the valve shaft 6 integrated with the valve shaft holder 9 also moves in the axial direction.

Note that a return spring 13 is fit to the outer circumference of the bush nut 12. In the case the valve shaft 6 is moved to the bottom side of the cylindrical member 1, the return spring 13 contacts with and is compressed by the bottom of the cylindrical member 1, and applies force in the direction which the movable screw 9a of the valve shaft holder 9 integrated with the valve shaft and the fixed screw 8a of the guide bush 8a are engaged.

Furthermore, a lower stopper 15is fixed under the fit portion of the valve shaft holder 9 in the guide bush 8. The lower stopper 15 is fixed to the guide bush 8 by screwing the fixed screw 8a to the female screw provided inside the lower stopper 15. A stopper 9c is integrally provided to the lower portion of the valve shaft holder 9. The stopper 9c abuts the lower topper 15 when the valve shaft holder reaches the lowest position, and restricts further rotation and descending of the valve shaft holder 9.

Fig.2 is a cross-sectional diagram illustrating a detailed configuration of the valve body 7 and the orifice 5. As illustrated in Fig. 2, a straight portion 16 is formed on the inner surface of the orifice 5. The straight portion 16 is a section where the diameter does not change, and the whole region of the straight portion 16 extends in parallel with the insertion direction of the valve body 7 and has constant diameter. That is, a columnar space is produce in the part of the orifice 5 where the straight portion 16 is formed. The straight portion 16 is formed in the region adjacent to the valve chamber 2a, that is, from the shallowest portion extending from the opening edge of the orifice 5 to the deeper portion, in the inner surface of the orifice 5. Note that if the opening edge of the orifice 5 is chamfered, the straight portion 16 may be extended from the chamfered portion and formed toward the deeper portion.

Meanwhile, the valve body 7 includes a protruding portion 17 at a position which faces the straight portion 16 when the valve body 7 is inserted into the deepest to the orifice 5. The protruding portion 17 is a portion of the specific position of the valve body 7 in the axial direction where the diameter is large and protrudes in the outer circumference direction, and is formed between a small diameter portion 18 and a waist portion 19. This protruding portion 17 protrudes as if the corner thereof thrusts the straight portion 16 when viewed from the direction perpendicular to the axial direction (that is, from the side direction), and gets the closest to the straight portion 16 at one point in the insertion direction of the valve body (that is, at one position in the axial direction). That is, the protruding portion 17 annularly gets the closest to the straight portion 16 in the specific plane perpendicular to the insertion direction. Note that the area which gets the closest to the straight portion 16 becomes small when the plane is formed in the tip of the corner of the protruding portion 17 as little as possible. Furthermore, this motorized valve 100 is a so-called no closing valve type, and the closest is at a level that has the clearance which the flow rate does not become zero and the desirable flow rate is ensured even when the valve body 7 is inserted to the position deepest in the orifice 5 at the time the valve is closed.

The valve body 7 includes a plane portion 6a above the waist portion 19, and the plane portion 6a and the waist portion 19 are continuously formed. The plane portion 6a is a plane perpendicular to the axial direction, and the outer edge of the plane portion 6a faces the inner edge of the upper surface of the orifice 5 with the predefined gap (hereinafter referred to as a gap of the upper surface of the orifice 5) therebetween. The gap in the upper surface of the orifice 5 has a size larger than the gap (referred to as gap of the protruding portion) between the protruding portion 17 and the straight portion 16 at the closest. Furthermore, the upper surface of the orifice 5 facing the plane portion 6a is a plane perpendicular the axial direction.

Note that the plane portion 6a is a reference plane to set the most descended position of the valve body 7, and highly precise reference position can be obtained because the plane portion 6a is abutted to the plane of the upper surface of the orifice 5. The motorized motor 100 is set so that the lower stopper 15 and the stopper 0c abut with each other at the position in which the valve body 7 is ascended to a predefined height from this reference place. Furthermore, by continuously forming the plane portion 6a and the waist portion 19, the waist portion 19 and the protruding portion 17 can be fabricated (formed by cutting), and highly precise sizing can be achieved.

This protruding portion 17 is formed so that the protruding portion 17 is in the position deep by the backlashes of the fixed screw 8a and the movable screw 9a or more from the shallowest portion of the straight portion 16 to the deeper side when the valve body 7 is inserted into the deepest in the orifice 5. That is, the straight portion 16 extends to length equal to or more than the backlash. Note that the reason why the straight portion 16 has the length equal to or more than the backlash is because it is desirable to form the protruding portion 17 according to the backlash extended by the wearing of the fixed screw 8a and the movable screw 9a rather than the initial backlash.

Note that the waist portion 19 is formed from the base of the valve body 7 to the protruding portion 17. The waist portion 19 is sunk so that the clearance between the straight portion 16 is larger than the size of foreign substances contaminated in the fluid. For example, the valve body 7 starts from the step portion formed by digging one step from the valve shaft 6. The waist portion 19 has the diameter constant from the initial end to the tip. Moreover, the diameter of the waist portion 19 gradually increases from the region with constant diameter, and the waist portion 19 draws a curved concaved surface, faces toward the plane perpendicular to the straight portion 16, and is connected to the protruding portion 17. In addition, the small diameter portion 18, which the diameter linearly gradually decreases toward the tip side and which changes the opening degrees when facing the straight portion 16, continues from the tip side immediately after the protruding portion 17. Therefore, the protruding portion 17 has a shape thrusting the corner to the straight portion 16.

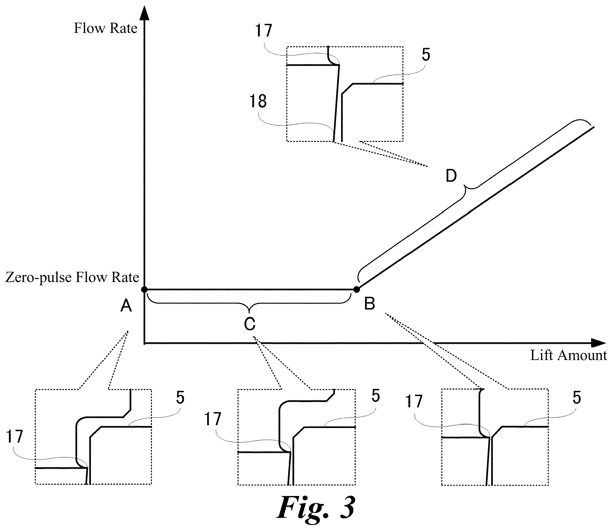

In the motorized valve 100 having such configurations, by rotating the rotor 10 by driving the stepping motor, the valve shaft 6 is lifted relative to the orifice 5 of the first port 3. Fig.3 is a graph showing the relationship between the movement amount of the valve body 7 in the ascending direction from the position in which the valve body 7 is inserted to the deepest in the orifice 5 (the most descended position of the valve body), and the flow rate according to the valve opening level from the flow rate (the flow rate of refrigerant passing through the orifice 5) . As illustrated in Fig. 3, in the condition A in which the valve body 7 is inserted into the deepest in the orifice 5, since the protruding portion 17 is facing the straight portion 17, the opening level of the first port 3 is minimum, and the flow rate between the first port 3 and the second port 4 becomes the minimum flow rate. Note that the flow rate when the valve body is in the most descended position is referred to as the zero-pulse flow rate.

Assume that the valve body 7 is moved in the direction going out from the orifice 5 (the ascending direction) from the condition A. The reason for this movement may be input of the pulse signal to the stepping motor, or may be the floating up of the valve body 7 with the backlash as the maximum due to the change in the pressure of the fluid. In the transition C until the condition B in which the protruding portion 17 is positioned in the shallowest portion of the straight portion 17, since the protruding portion 17 continues to face the straight portion 16, the opening level of the first port 3 does not change from the condition A that is minimum, and the flow rate between the first port 3 and the second port 4 is maintained the zero-pulse flow rate that is the minimum flow rate. That is, the minimum flow rate is maintained by absorbing the flow rate by the backlash. The condition B is a condition in which the protruding portion 17 and the shallowest portion of the straight portion 16 is in a same height.

Further assume that the valve body 7 move in the direction going out from the orifice 5 from the condition B. This movement us by the input of the pulse signal to the stepping motor. At this time, the protruding portion 17 is positioned higher than the shallowest portion of the straight portion 16. Moreover, the straight portion 16 faces the small diameter portion 18. Therefore, in the transition D after the condition B, the opening level of the first port 3 increases as the valve body 7 goes out of the orifice 5, and the flow rate increases proportional to decrease of the diameter of the small diameter portion 18.

Furthermore, assume that foreign substances are contaminated in the fluid, and reached between the valve body 7 and the orifice 5 during the operation of the motorized valve 100. In this case, since a clearance sufficiently larger than the foreign substances is formed between the waist portion 19 and the straight portion 16, the foreign substances would not be sandwiched between the waist portion 19 and the straight portion 16.

In addition, since the protruding portion 17 is sufficiently smaller than the length of the straight portion 16, the possibility for the foreign substances to be sandwiched between the protruding portion 17 and the straight portion 16 is very small. Even by any chance the foreign substances are sandwiched between the protruding portion 17 and the straight portion 16, the contact point between the foreign substances and the straight portion 16, and the contact point between the foreign substances and the protruding portion 17 are displaced. Therefore, the foreign substances come off from between the protruding portion 17 and the straight portion 16. Thus, in this motorized valve 100, the minimum flow rate taking the backlash in consideration can be maintained even when the foreign substances enter.

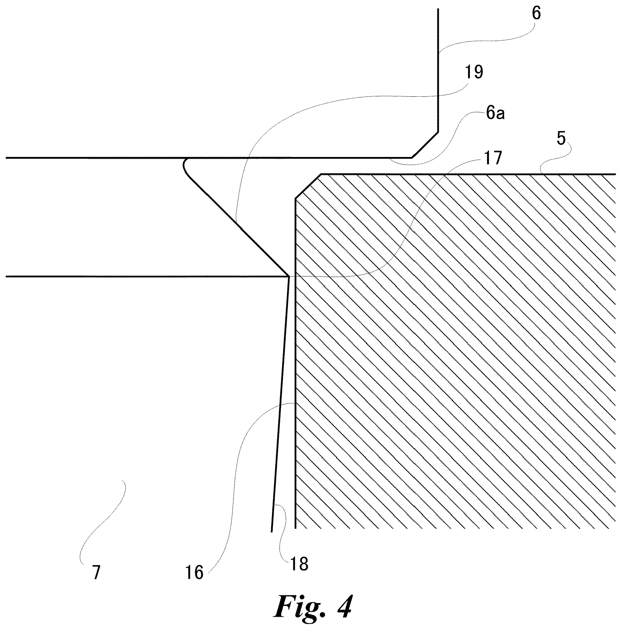

Note that the valve body 7 may have various shapes as long as the shape get close to the straight portion 16 at one point in the protruding portion 17. For example, as illustrated in Fig. 4, the valve body 7 starts from the step portion formed by digging one step from the valve shaft 6. The diameter of the waist portion 19 linearly gradually increases from this initial end, and the waist portion 19 is connected to the protruding portion 17. Moreover, the small diameter portion 18, which the diameter linearly gradually decreases immediately after the protruding portion, continues therefrom. Therefore, the protruding portion 17 has a shape thrusting the corner to the straight portion 16, and gets the closest to the straight portion 16 at one point.

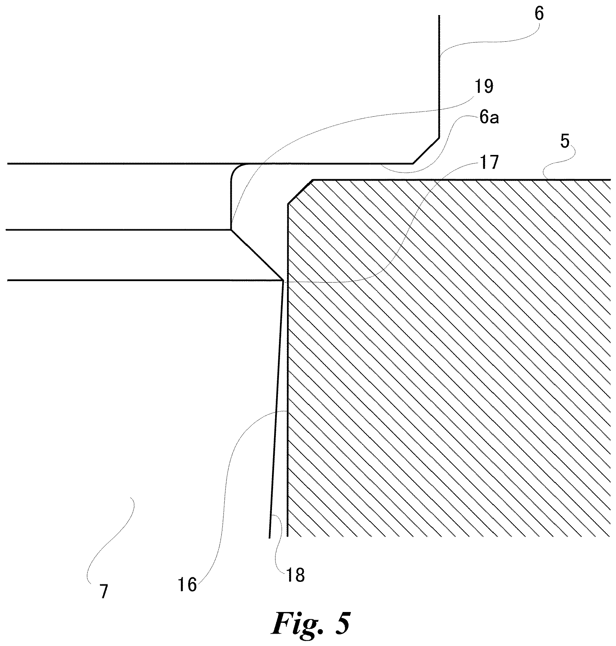

Furthermore, as illustrated in Fig. 5, the valve body 7 starts from the step portion formed by digging one step from the valve shaft 6. The waist portion 19 has the diameter constant from the initial end to the tip, and the diameter of the waist portion 19 linearly gradually increases from the region with constant diameter, and the waist portion 19 is connected to the protruding portion 17. Moreover, the small diameter portion 18, which the diameter linearly gradually decreases immediately after the protruding portion, continues therefrom. Therefore, the protruding portion 17 has a shape thrusting the corner to the straight portion 16, and gets the closest to the straight portion 16 at one point.

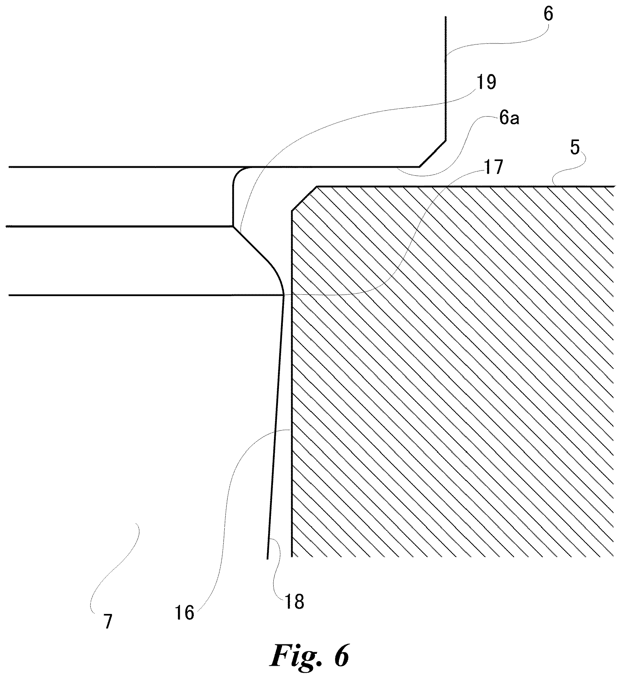

In addition, as illustrated in Fig. 6, the waist portion 19 has the diameter constant from the initial end to the tip of the valve body 7, and the diameter of the waist portion 19 gradually decreases from the region with constant diameter, and the waist portion 19 draws a curved convex surface and is connected to the protruding portion 17. Therefore, the protruding portion 17 has a pointed shape produced at the boundary of the curved surface and the straight line, and gets the closest to the straight portion 16 at one point.

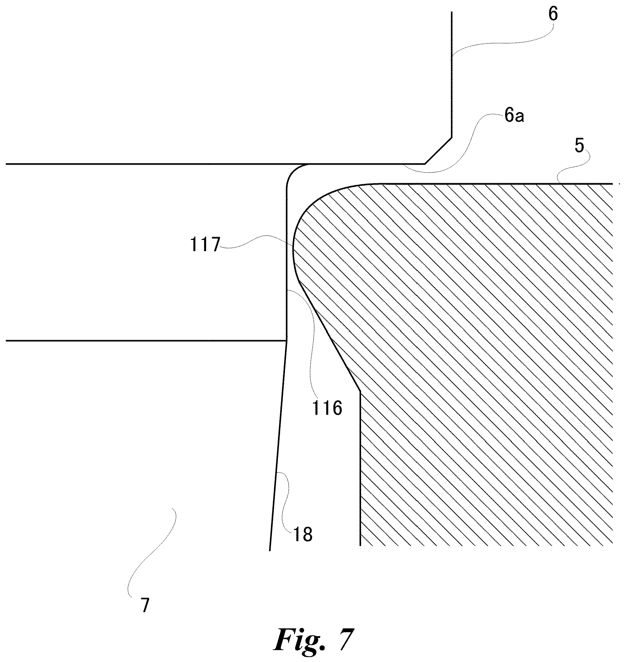

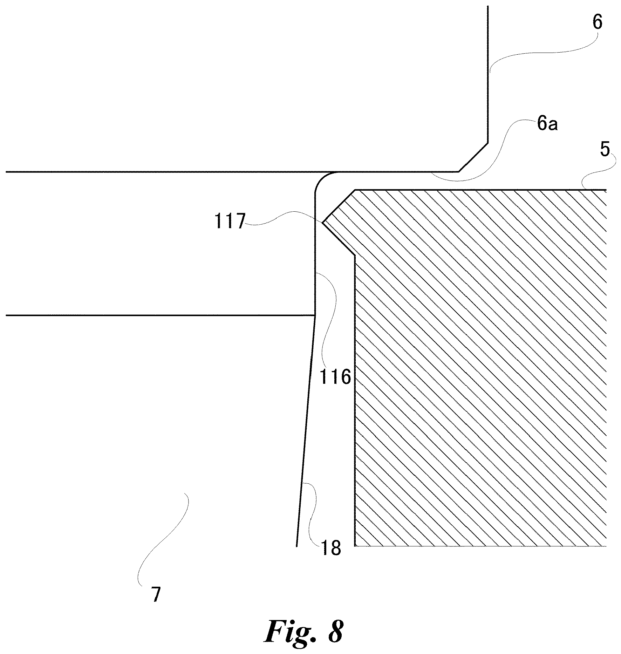

Moreover, the motorized valve 10 may have the straight portion formed on one of the outer surface of the valve body 7 and the inner surface of the orifice 5, and have the protruding portion on the other. In examples illustrated in Figs. 7 and 8, a straight portion 116 is formed on the outer circumference of the valve body 7, and a protruding portion 117 is formed on the inner surface of the orifice 5. For example, as illustrated in Fig. 7, the valve body 7 starts from the right-angle step portion formed by digging one step from the valve shaft 6. The straight portion 116 is formed in the valve body 7 from the base of the valve body 7 to the tip. Meanwhile, the orifice 5 has the protruding portion 117 at the position facing the straight portion 116 when the valve body 7 is inserted into the deepest in the orifice 5. In the example illustrated in Fig.7, the protruding portion 117 is formed at the shallowest portion of the orifice 5.

This protruding portion 117 is the narrowest portion of the orifice 5, and is continuously formed around the inner circumference of the orifice 5 from the tip of the orifice 5 at constant height. Firstly, the orifice 5 starts to expand so as to draw a curved surface from the opening edge toward the center of the axis, and include the protruding portion 117 at the apex of the expansion that is the narrowest portion. Moreover, the orifice 5 starts to shrink from the protruding portion 117 toward the deeper side at the curvature same as the expansion, and the diameter of the orifice 5 linearly gradually increases from the intermediate portion. That is, the protruding portion 117 directs the curved surface to the straight portion 116 and gets the closest to the straight portion 116 at one point in the axial direction by the curved surface in the insertion direction. This protruding portion 117 is formed at the position having a distance in the upper direction by equal to or more than the backlash of the fixed screw 8a and the movable screw 9a from the deepest portion of the straight portion toward the shallower side (upper side).

Alternatively, as illustrated in Fig. 8, the diameter of the orifice 5 linearly shrink from the opening edge of the orifice 5, and includes the protruding portion 117 at the apex of the shrink that is the narrowest portion. Moreover, the diameter of the orifice 5 linearly increases from the protruding portion to the deeper side. Therefore, the protruding portion 117 has a shape thrusting the corner to the straight portion 116, and gets the closest to the straight portion 116 at one point in the axial direction.

In all of the various aspect of the valve body 7 and the orifice 5 indicated in Figs. 4 to 8, the protruding portions 17 and 117 faces the straight portions 16 and 116 with a distance equal to or more than the length of the backlash during the process in which the valve body 7 goes out from the orifice 5. Therefore, even if the valve body 7 floats up with the backlash as the maximum by the change in pressure of the fluid, the opening level of the first port 3 does not change from the minimum, and the minimum flow rate between the first port 3 and the second port 4 is maintained.

Even if the foreign substances are contaminated in fluid, since the section of the protruding portions 17 and 117 are sufficiently small relative to the straight portions 16 and 116, the foreign substances are not sandwiched between the protruding portions 17 and 117 and the straight portions 16 and 116. Even by any chance the foreign substances are sandwiched between the protruding portions 17 and 117 and the straight portions 16 and 116, the foreign substances would come off from between the protruding portions 17 and 117 and the straight portions 16 and 116 by slightly moving the valve body 7.

Accordingly, In this motorized valve 100, the first port 3 and the second port 4 is communicated via the valve chamber, the orifice 5 is provided in the first port 3, and the valve body 7 which has variable insertion amount to the orifice 5 is provided inside the valve chamber 2a. Moreover, the straight portions 16 and 116 with constant diameter in the insertion direction are formed to one of the inner surface of the orifice 5 and the outer surface of the valve body 7. In addition, the protruding portions 17 and 117 which gets the closest to the straight portions 16 and 116 at one point in the insertion direction of the valve body 7 are formed to the other of the inner surface of the orifice 5 and the outer surface of the valve body 7 which the straight portions 16 and 116 are not formed. Thus, since the protruding portions 17 and 117 is sufficiently smaller than the length of the straight portions 16 and 116, the minimum flow rate taking the backlash in consideration can be maintained.

Note that not only the first port 3 and the second port4, but more port may be provided to the motorized valve 100. Furthermore, the effect of suppressing the trouble due to foreign substances is improved when the maximum diameter or the thickness of the protruding portions 17 and 117 are as small as possible relative to the length which the protruding portions 17 and 117 faces the straight portions 16 and 116 when inserting or pulling out the valve body 7. Therefore, although it is preferable that the thickness of the protruding portions 17 and 117 is zero in designs and the protruding portions 17 and 117 gets the closest to the straight portions 16 and 116 at one point in the insertion direction of the valve body 7, the protruding portions 17 and 117 may have some thickness as long as the thickness is thinner than the length which the protruding portions 17 and 117 faces the straight portions 16 and 116 when inserting or pulling out the valve body 7.

### (Other Embodiment)

Although the embodiment of the present disclosure is described above, various omissions, replacement, and modifications can eb made thereto without departing from the scope of the invention. The present embodiment and the modification thereof are included in the scope of the claims of the invention and equivalent thereto, together with the scope of the invention and abstract.

### REFERENCE SIGNS

- 1:: cylindrical member
- 2:: valve main body
- 2a:: valve chamber
- 2b:: support hole
- 2d:: brim member
- 3:: first port
- 4:: second port
- 5:: orifice
- 6:: valve shaft
- 6a:: step portion
- 7:: valve body
- 8:: guide bush
- 8a:: fixed screw
- 8b:: projection portion
- 9:: valve shaft holder
- 9a:: movable screw
- 9b:: ceiling
- 9c:: stopper
- 10:: rotor
- 10a:: installation hole
- 10b:: support body
- 11:: rotor presser
- 12:: push nut
- 13:: return spring
- 14:: compression coil spring
- 15:: lower stopper
- 16:: straight portion
- 116:: straight portion
- 17:: protruding portion
- 117:: protruding portion
- 18:: small diameter portion
- 19:: waist portion
- 20:: screw feeding mechanism
- 100:: motorized valve

## Claims

1. A motorized valve to control the flow rate, comprising:
a plurality of ports communicated via a valve chamber;
an orifice provided to one of the ports;
a valve body which is provided inside the valve chamber and which has a variable insertion amount relative to the orifice;
a straight portion which is formed to one of an inner surface of the orifice and an outer surface of the valve body, and which has a diameter constant in an insertion direction of the valve body; and
a protruding portion which is formed to the other of the inner surface of the orifice and the outer surface of the valve body which the straight portion is not formed, and which gets the closest to the straight portion at one point in the insertion direction of the valve body.

2. The motorized valve according to claim 1, wherein:
the straight portion is formed to the inner surface of the orifice, and
the protruding portion is a portion with the largest diameter in the valve body formed to the outer surface of the valve body.

3. The motorized valve according to claim 1, wherein:
the straight portion is formed to the outer surface of the orifice, and
the protruding portion is the narrowest portion in the orifice formed to the outer surface of the orifice.

4. The motorized valve according to any one of claims 1 to 3, wherein the protruding portion gets the closest at one point protruding as a corner, gets the closest at one point in a curved surface, or gets the closest at one point in a boundary of a curved surface and a plane which are smoothly connected, relative to the straight portion.

5. The motorized valve according to claim 2, further comprising a screw feeding mechanism to move the valve body,
wherein the protruding portion formed in the valve body face the straight portion at a position deep by a backlash of the screw feeding mechanism from the shallowest portion of the straight portion when the valve body is inserted into the deepest portion of the orifice.

6. The motorized valve according to claim 3, further comprising a screw feeding mechanism to move the valve body,
wherein:
the protruding portion formed in the orifice faces the straight portion at the shallowest portion of said straight portion, and
the straight portion has a diameter constant for equal to or more than the backlash of the screw feeding mechanism in the insertion direction of the valve body.

7. The motorized valve according to any one of claims 1 to 6, further comprising:
a cylindrical member connected to a valve main body; and
a stator wrapping the cylindrical member.
